# EUROPEAN PATENT SPECIFICATION

(11) **EP 4 369 179 B1**
(45) Date of publication and mention of the grant of the patent: **07.01.2026**
(21) Application number: 22206238.2
(22) Date of filing: 08.11.2022
(51) Int. Cl.: G06F 8/10, G06F 8/74, G06Q 90/00

(54) **OBJECT-CENTRIC DATA MODEL FOR PROCESS MINING**
OBJEKTZENTRISCHES DATENMODELL FÜR DIE PROZESSGEWINNUNG
MODÈLE DE DONNÉES CENTRÉ SUR UN OBJET POUR L'EXPLORATION DE PROCESSUS

(43) Date of publication of application: 15.05.2024
(73) Proprietor: Celonis SE, 80333 München (DE)
(72) Inventor: Matthaei, Svenja, 80333 München (DE); Nolle, Tim, 80333 München (DE); Rossbauer, Stephan, New York, 10007 (US)
(74) Representative: 2s-ip Schramm Schneider Bertagnoll Patent- und Rechtsanwälte Part mbB

(56) References cited:
- ADAMS JAN NIKLAS ET AL: "OCpi: Object-Centric Process Insights", 13 June 2022, 20220613, PAGE(S) 139 - 150, XP047624337
- REBMANN ADRIAN ET AL: "Uncovering Object-Centric Data in Classical Event Logs for the Automated Transformation from XES to OCEL", 7 September 2022, 20220907, PAGE(S) 379 - 396, XP047632589
- ADAMS JAN NIKLAS ET AL: "Defining Cases and Variants for Object-Centric Event Data", 2022 4TH INTERNATIONAL CONFERENCE ON PROCESS MINING (ICPM), IEEE, 23 October 2022 (2022-10-23), pages 128 - 135, XP034247869, [retrieved on 20221214], DOI: 10.1109/ICPM57379.2022.9980730

## Description

### Scope of the invention

The present invention relates to a method to generate an object-centric data model for process mining from any external computer system for any process.

### Background of the invention

Processes are executed everywhere and any time. A process comprises a number of process steps and executing these process steps generates a process instance, also called case. As of today, many processes are monitored, wherein process steps are usually recorded with a number of properties.

It was found that recording the process steps into event streams makes process mining much more efficient. An event stream is a collection of process steps grouped by process instance and stored in their order of execution. In its basic form, the event stream, or process protocol therefore has the three attributes "case ID", "process step" (or "activity"), and "timestamp", which corresponds to the single case event log.

Generating a process protocol for executed processes thus requires a one-to-one mapping between process steps and a process instance. In practice, however, processes are often more complex in that the same process step is relevant for several process instances. For instance, when mounting cargo to a truck, the process step "load cargo" is relevant for a truck-centric process instance, in which the truck is to be loaded, and for a cargo-centric process instance, in which the cargo is to be loaded into the truck. The cargo and the truck thus are two interacting objects which are involved in the same process step. Such one-to-many relations and even many-to-many relations between process steps and objects form part of many realistic processes, in particular processes with multiple entities and splitting thereof.

Data models that are purely based on process protocols therefore require expensive querying techniques in order to analyze the executed real-world process instances. The querying techniques are not only expensive with respect to their execution but even with respect to their creation, since the to-be-executed queries for analyzing multi-object processes based on single-case event logs are very difficult to write and therefore labor-intensive

The document ADAMS JAN NIKLAS ET AL: "OCπ: Object-Centric Process Insights", 13 June 2022 (2022-06-13), 20220613, PAGE(S) 139 - 150, [retrieved on 2022-06-13] discloses OCπ, a tool aiming to make the process behind object-centric event data transparent to the user. It achieves this by two measures: 1) By showing frequent process executions, defined and visualized as a set of event sequences of different types that share events. The frequency is determined with respect to the activity attribute, i.e., these are object-centric variants. 2) By allowing the user to filter infrequent executions and activities, discovering a mainstream process model in the form of an object-centric Petri net.

The document REBMANN ADRIAN ET AL: "Uncovering Object-Centric Data in Classical Event Logs for the Automated Transformation from XES to OCEL", 7 September 2022 (2022-09-07), 20220907, PAGE(S) 379 - 396, [retrieved on 2022-09-07] discloses an approach that automatically uncovers object-related information in flat event data and uses this information to transform the flat data into an objectcentric event log according to the OCEL format. This is achieved by combining the semantic analysis of textual attributes with data profiling and control-flow-based relation extraction techniques.

The document ADAMS JAN NIKLAS ET AL: "Defining Cases and Variants for Object-Centric Event Data", 2022 4TH INTERNATIONAL CONFERENCE ON PROCESS MINING (ICPM), IEEE, 23 October 2022 (2022-10-23), pages 128-135, DOI: 10.1109/ ICPM57379.2022.9980730, [retrieved on 2022-12-14] discloses a case concept for object-centric process mining: process executions. These are graph-based generalizations of cases as considered in traditional process mining. Furthermore, the document teaches techniques to extract process executions. Based on these executions, equivalent process behavior are determined with respect to an attribute using graph isomorphism. Equivalent process executions with respect to the event's activity are objectcentric variants, i.e., a generalization of variants in traditional process mining. A visualization technique is provided for objectcentric variants.

### Object of the invention

It is therefore an object of the invention to provide a method for generating a data model on basis of which real-world processes can be analyzed more efficiently, in particular by reducing the cognitive challenge to query the generated data model.

### Solution according to the invention

This object is solved by the computer-implemented method according to the independent claim 1. Advantageous embodiments and modifications are specified in the respective dependent claims.

Provided is therefore a computer-implemented method to generate an object-centric data model of process data. The process data is extracted from at least one external computer system and is a multidimensional data set which is generated during executions of processes. Each process comprises a number of process steps. A number of object instances participate in executing the number of process steps.

The method comprises:
- creating a definition of at least two object types by defining a number of attributes for each object type,
- assigning the number of attributes for each object type to at least one data source of the at least one external computer system to determine process data related to the number of object instances,
- generating, for each object type, at least one execution command to extract at least one object instance corresponding to the definition of the object type by transforming the determined process data into a data structure representing the at least one object instance,
- creating, for each object type, at least one object instance by executing the execution command, wherein the at least one extracted object instance is assigned to exactly one object type,
- determining a number of object-to-object relationships to join two respective object types, and
- generating the object-centric data model on basis of the at least two object types and the number of determined object-to-object relationships.

Defining object types has the advantages that recorded process instances may be structured into the object types, i.e., types of object instances that are created, modified, and terminated during the execution of a process. Based on the defined object types, object-centric event logs may be generated thereby solving above identified problems with the single case event logs. Object-centric event logs comprise information on process steps and the object instances which the respective process steps concern.

The attributes of an object type characterize the object type. Thus, the attributes of an object type provide a search requirement to identify corresponding object instances in the recorded process data.

Assigning the number of attributes to a respective data source comprises functions, filter, joins and any further operation that is required to translate the raw data stored in the source system into the defined object types. This feature enables a transformation of the extracted process data into object instances, wherein each object instance is assigned to exactly one object type based on its attributes. Consequently, the method according to the invention reduces the cognitive challenge to create the object-centric data models through queries on the raw data stored in the at least one external source system.

Accordingly, this transformation improves the efficiency of process mining on real-world processes in terms of execution times and memory requirements, since the transformation is abstracted from the queries of the actual process mining application. Queries that operate on single case event logs instead would need to carry out a similar transformation with each execution.

Generating the at least one execution command on basis of the assignment of the number of attributes to at least one respective data source has the advantage that the execution commands may be efficiently created in the backend. Further, the execution commands may be optimized to the data structure of the relevant data sources of the at least one external computer system. Additionally, an automatic generation of execution commands generally reduces errors, in particular typing errors and/or copy-and-paste errors, in comparison to a manual coding of execution commands.

The at least one execution command comprises filter conditions which enable, e.g., filtering records of a database table of the at least one data source based on the presence of specific values in predefined fields. This feature has the advantage that the process raw data may be initially reduced before its transformation into the data structure representing object instances of a corresponding object type. Further, the filtering may ensure that the applied business logic is correct. The filter condition may depend on the object type under consideration.

Determining the object-to-object relationships enables a natural mapping of the topology of a real-world process onto a relational database. The object-to-object relationships may be used for populating the filter conditions and enable to evaluate key performance indicators on top of multiple object instances of multiple object types.

Preferably, the method further comprises:
- creating a definition of a number of event types by defining a number of attributes for each event type,
- determining a number of event instances on basis of the number of process steps by populating the number of attributes of corresponding event types such that each determined event instance is assigned to exactly one event type, and
- determining a number of event-to-object relationships to join at least one object instance of the at least two object types with at least one event instance, and
- appending the number of determined event types and the number of determined event-to-object relationships to the object-centric data model.

Relating event instances, subsequently also called events or process steps, to the object instances of multiple different object types which participated in carrying out the respective event instance - instead of always relating event instances to object instances of exactly one object type - simplifies the to be executed queries. The one-to-many relationships and many-to-many relationships between event instances and object instances may be precisely represented by relationships between database tables thereby enabling to consider processes with multiple entities, their interactions and their dependencies.

Preferably, the event instances are determined from at least one attribute of at least one object type.

Deriving event instances from at least one attribute of at least one created object type has the advantage that the event instances may be determined very efficiently from the already transformed data. The transformed data are cleaned and have a well-controlled format such that event instances may be computed very efficiently as compared to determining event instances directly based on the raw data in the at least one external computer system.

This feature has the further advantage that the event-to-object relationship may be directly established from the object instances comprising the respective attributes to determine the corresponding event instances.

Preferably, the event instances are determined from a predefined changelog which is determined from the at least one external computer system, wherein the predefined changelog is generated during executions of processes.

The changelog may comprise attributes, in particular standardized attributes, which indicate changes or modifications of object instances. This feature has the advantage of providing a default data store for event instances. As a result, determining the event instances on basis of a changelog enables a highly automatized generation of event instances, in particular without any user interaction required. This preferred embodiment is therefore particularly useful for standardized processes such as purchase order processes, account payable processes, hiring processes, certain manufacturing processes, and so on.

The approach based on the changelog may also be combined with determining event instances on basis of attributes of the at least one created object type.

Preferably, the at least one execution command is generated based on a configuration file. The executor executes the at least one execution command.

The configuration file may be a JSON file, a YAML file or a file having a similar generic format.

The advantage of generating execution commands on basis of a configuration file is threefold: First, so-generated execution commands are less error prone, in particular typo-prone, since a configuration file may be validated easier and more efficiently than an execution command in a specific programming or query language, and since the generation of the execution command is automatized. Second, abstracting the execution commands from a configuration input enables to efficiently create the execution commands, in particular queries, in the backend and to switch the technology as it fits best. Third, a delta processing may be enabled by default such that the determined data model is updated as updates in the at least one external data source occur instead of retransforming the entire source data repeatedly.

Preferably, the method further comprises adapting the configuration file by way of a user interface and validating the adapted configuration file before further processing.

This embodiment has the advantage that also custom processes may be transformed into the object-centric data model, such as e.g., air traffic controller processes.

The configuration file comprises information about the attributes of each object type and their mapping to the at least one data source of the at least one external computer system.

The user interface provides the user a manual way to define object types and assign their attributes to data sources. Thus, the user interface enables a code-free editing of execution commands through an unbroken chain connecting the action of user of the user interface, the configuration file being adapted correspondingly, and the automatically generated execution commands based on which the user-defined object types and/or event types are populated.

Preferably, the definition of the at least two object types are created, the number of attributes for each object type are assigned to at least one data source of the at least one external computer system, and the at least one execution command is generated automatically, in particular on basis of a knowledge repository.

Further preferred is an embodiment, according to which the definition of a number of event types are created, and the events are determined automatically, in particular on basis of a knowledge repository.

Preferably, the configuration file is stored in the knowledge repository.

In particular for standardized processes, the knowledge repository may provide a predefined configuration file which comprises known definitions of object types and/or event types and their mapping from the data sources. Hence, the creation and population of object types and/or event types may be highly automated.

In one embodiment, the events are determined using at least one heuristic which is based on a timestamp which is extracted from respective process steps.

In practice, raw data of executed processes is recorded using a predefined clock frequency. Hence, not every record in the raw data relates to an individual process step or event. Therefore, it is necessary to efficiently transform the raw data into event data. However, events may have different signatures in the raw data such that there is no general rule for their transformation. It was found useful to provide a collection of heuristics based on which the events may be determined efficiently.

Preferably, the at least one heuristic is selected from a group consisting of:
- grouping predefined changes in the at least two object types based on the timestamp,
- grouping predefined changes in a specific object type based on the timestamp,
- a manual instantiation by a user, and
- combinations thereof.

Preferably, the at least one heuristic is stored in the configuration file.

Storing also the at least one heuristic in the configuration file has the advantage that all transformations used to generate the object-centric data model may be validated. As a result, the configuration file provides a single, validated source of truth for the applied transformations.

Preferably, the number of event-to-object relationships is determined based on a group of methods consisting of:
- relating an event instance to an object instance from which the event instance originates or based on which a value of an attribute of the object instance changes,
- relating an event instance to an object instance through a corresponding object-to-object relationship comprising the object instance from which the event instance originates,
- each objects instance comprising a date attribute, in which a timestamp is stored, and wherein an event instance is related to all object instances of which the stored timestamp lies within a predefined time interval of a predefined reference timestamp,
- combinations thereof.

In one embodiment, each object instance and each event instance are stored in a relational database, wherein each object-to-object relationship is a foreign-key relationship joining two respective object types and each event-to-object relationship is a primary-key relationship joining a corresponding event instance to a corresponding object instance.

Preferably, the object-centric data model of process data is provided to a process mining system comprising multiple consumers, wherein each consumer determines a set of key performance indicators by querying the object-centric data model.

### Short summary of the figures

Exemplary embodiments of the method according to the invention as well as a number of aspects of the invention are described below in detail in combination with the figures, which show:
- Fig.1: a flow chart of an embodiment of the method according to the invention along with an embodiment comprising a further aspect of the invention;
- Fig. 2: a schematic view of a system in which the method according to the invention may be executed;
- Fig. 3: a schematic view focusing on the object type building system according to an aspect of the invention;
- Fig. 4: a schematic view of a system in which the method according to an aspect of the invention may be executed;
- Fig. 5: an exemplary embodiment of a process topology graph according to an aspect of the invention;
- Fig. 6: a schematic view on an embodiment according to an aspect of the invention to generate event instances; and
- Fig. 7: an exemplary embodiment of the user interface of the object type building system.

### Detailed description of the invention

Real-world processes are often very complex as they involve interactions of a number of object instances. Object instances may be related in one-to-many connections and/or many-to-many connections. Process data, however, is traditionally recorded by recording the process steps as they are executed, i.e., in so-called event streams. An event stream is a linear sequence of process steps attributed to a single process instance, wherein the process steps create, modify and/or terminate object instances. The linear data structure of a single case event stream causes tremendous complexity when analyzing realistic processes with many interacting object instances.

The present invention provides a method to transform the recorded process data from a linear event stream to a data structure that enables an efficient analysis also for real-world processes.

It was found that storing the process data in a relational database system, such that the one-to-many relations and many-to-many relations of object instances are mapped to respective relationships between database tables in the relational database system, the cognitive challenge of creating process mining queries to be executed can be reduced.

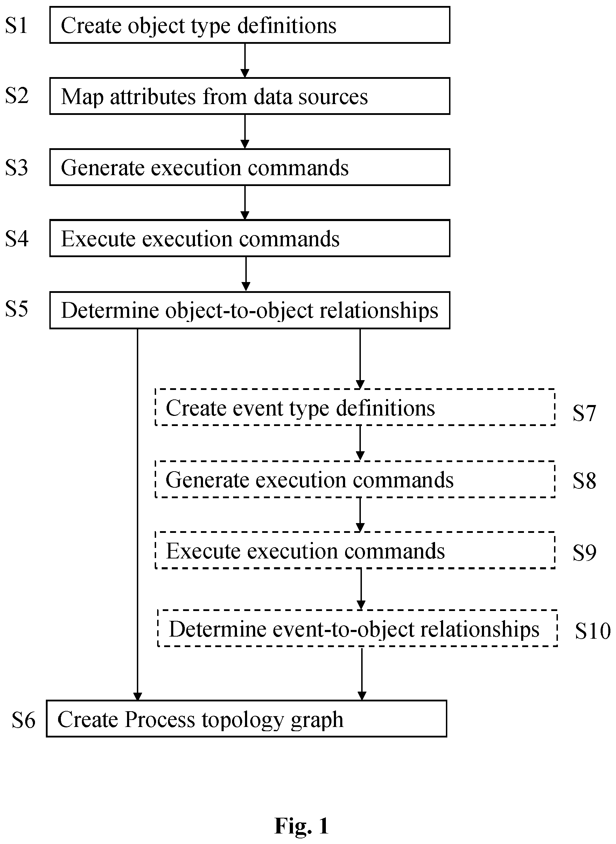

**Fig. 1** provides a flow chart of the method steps of an embodiment of the invention and optionally method steps according to a further aspect of the invention.

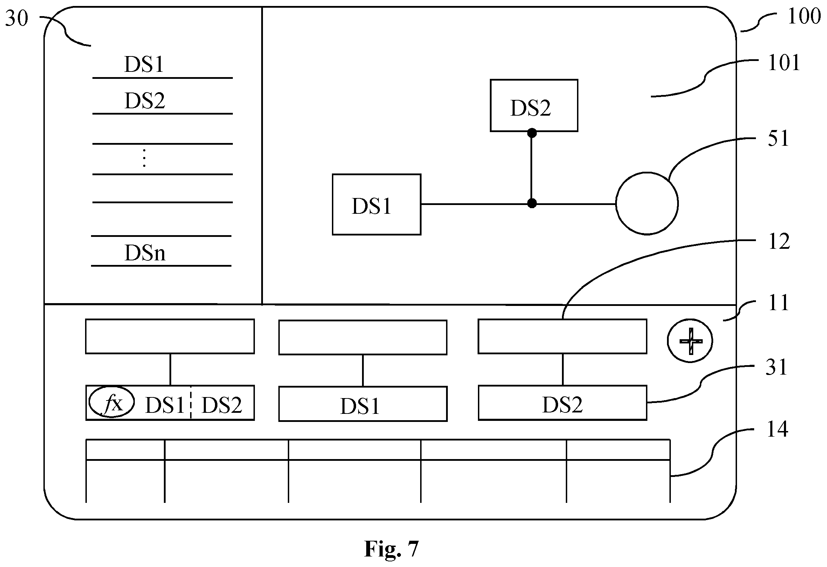

The transformation of recorded process data from linear event streams into an object-centric data model is started by step one S1 according to which object type definitions 11 are created. The object type definitions 11 may be created manually by input of a user in a user interface 100 of the object type building system 10 as described below with respect to Fig. 7. Further, the object type definitions 11 may be retrieved from a knowledge repository 60 which is particularly useful for standardized objects, such as orders, items, and deliveries in order processes; applications, interviews, and positions in hiring processes; or applications, search reports, and grants in patent prosecution processes.

In a second step S2, attributes 12 defining an object type 51 are mapped to data sources 30, wherein the data sources 30 are typically located in at least one external computer system. Similarly, the mapping step S2 can be performed manually by a user using the user interface 100 of the object type building system 10 or automatically using templates for standardized objects stored in the knowledge repository 60.

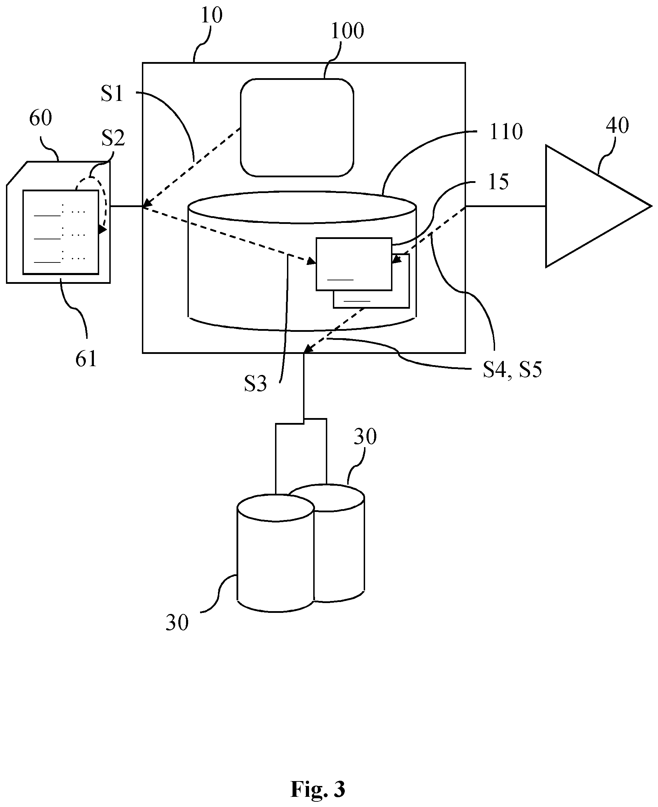

Based on the mapping 31 between attributes 12 of the object type 51 and data sources 30 comprising content for these attributes, execution commands 15 are created in the third step S3. The creation of the execution command 15 is performed automatically as described further below with respect to Fig. 3.

An executor 40 is adapted to execute the created execution commands 15 in the fourth step S4. In doing so, object instances 52 are determined in the recorded process data and stored in tables of the relational database system. Thereby, each object instance 52 is assigned exactly to one object type 51.

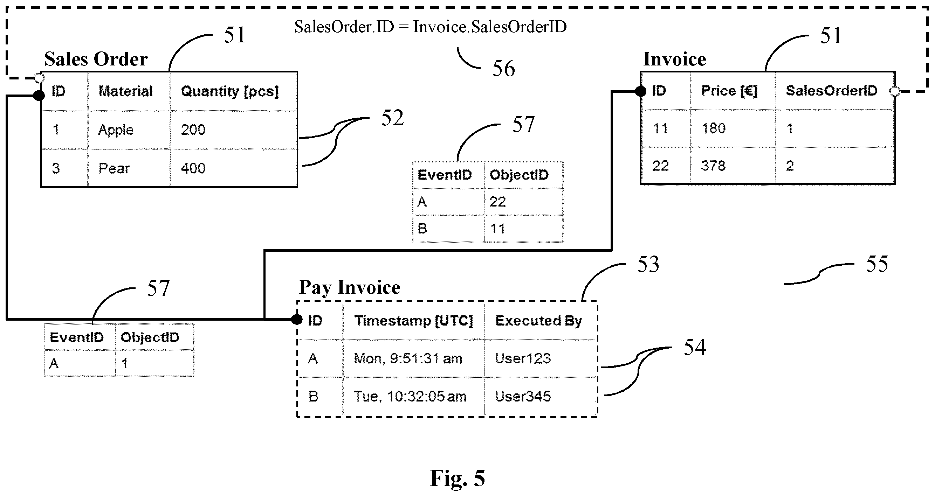

In a fifth step S5, object-to-object relationships 56 are determined from the determined object instances 52. Object-to-object relationships 56 may be represented by foreign-key relationships as described with respect to Fig. 5.

Based on the determined object-to-object relationships 56, a process topology graph 55 is created in the sixth step S6. An example for the process topology graph 55 is discussed with respect to Fig. 5.

A process topology graph 55 comprising only object types 51 and their relationships 56 enables efficient business intelligence applications on real-world processes.

Preferably, after having determined object instances 52 to populate respective object types 51 and their object-to-object relationships 56, also event instances 54 are determined, as realized by method steps S7 to S10.

In a seventh step S7, event type definitions are created. Like the object types 51, the event types 53 may be either created manually by a user in the user interface of the event type building system 20 or automatically from event type definitions stored in the knowledge repository 60.

Based on the event type definitions, execution commands to determine respective event instances 54 are generated automatically in an eight step S8.

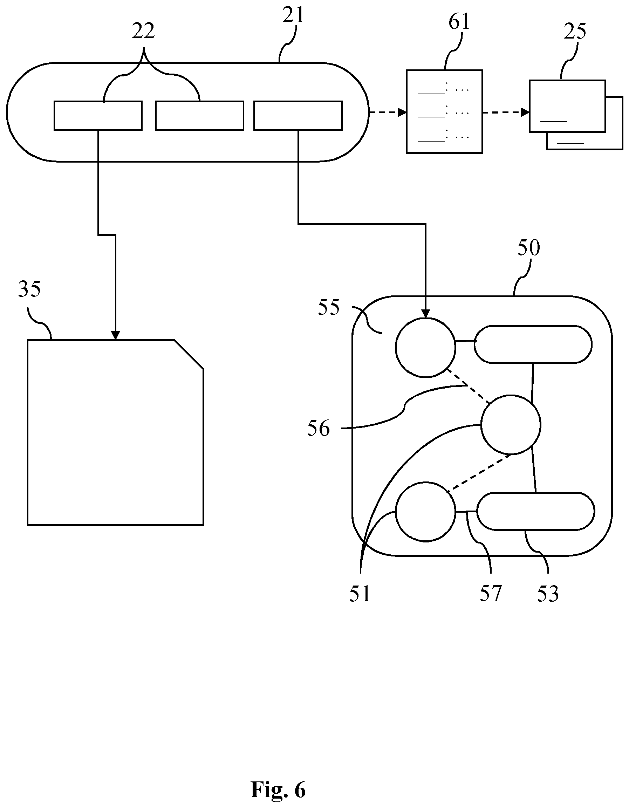

In the ninth step S9, executing the execution commands populates the event types 53 with event instances 54. A specific embodiment for creating event type definitions according to step S7 and determining events according to steps S8 and S9 is described further with respect to Fig. 6.

In a subsequent step S10, event-to-object relationships 57 are determined. In this embodiment the process topology graph 55 is created based on the object types 51 and their relationships 56 as well as the event types 53 and their relationships 57 to the object types 51.

The process topology graph 55 comprising both object types 51 and event types 53 enables efficient process mining applications.

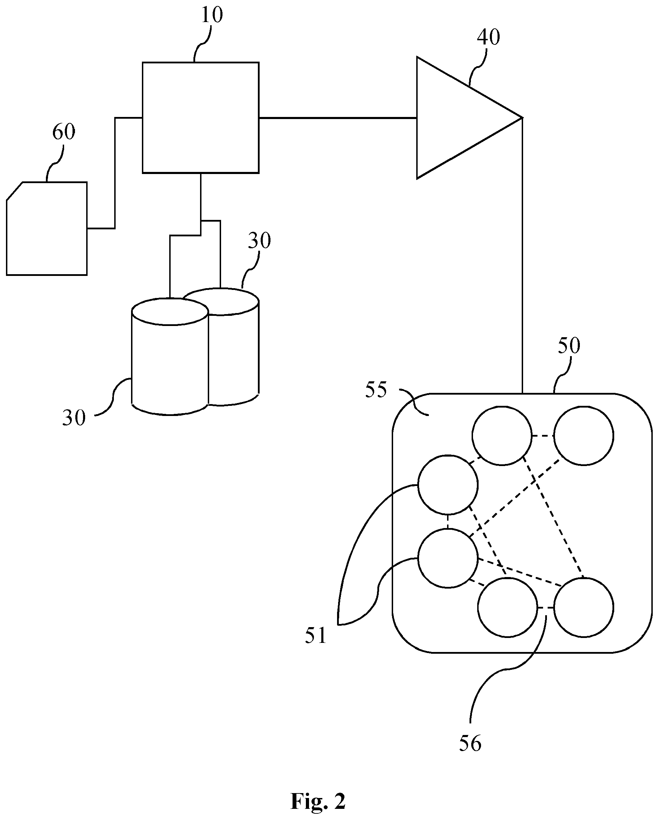

**Fig. 2** shows a schematic view of a system in which the method according to the invention may be executed.

The object type definitions 11 are either created in the object type building system 10 or retrieved from the knowledge repository 60 to which the object type building system 10 has access. In the knowledge repository 60, for instance, object type definitions 11 for standardized object types may be stored. The object type building system 10 further has access to at least one data source 30 in the at least one external computer system.

With object types 51 being defined and their attributes 12 mapped to respective data sources 30, the executor 40 may be triggered to execute the automatically generated execution commands 15 for determining object instances 52 for each object type 51. Further, object-to-object relationships 56 are determined.

The collection of object types 51 and their corresponding object instances 52 is the object-centric data model 50, which is subsequently also referred to as the object universe. In the object-centric data model 50, the object types 51 are connected by their relationships 56 to a process topology graph 55.

**Fig. 3** shows a schematic view focusing on the object type building system according to an aspect of the invention.

The object type building system 10 comprises a user interface 100 and a storage device 110, in particular a main memory, which is in signal connection to the user interface 100. The object type building system 10 may comprise further components which increase the user experience and/or security of its service.

The object type building system 10 is in signal connection to a knowledge repository 60, at least one external data source 30, and an executor 40. The connection to the knowledge repository 60 is used for retrieving object type definitions 11 and/or configuration files 61 based on which object types 51 may be created. The definitions 11 and configuration files 61 stored in the knowledge repository 60 are predefined and may be considered as a condensed knowledge of repeated analysis of standardized processes.

The connection to the executor 40 is required to execute the execution commands 15 generated by the object type building system 10. The execution commands 15 are executed in the at least one external data source 30 via its connection to the object type building system 10.

Object types 51 may be created manually, automatic, and using a combination thereof. Creating object types 51 automatically is further described below. Creating object types 51 manually is further described with respect to an exemplary user interface 100 of the object type building system 10 shown in Fig. 7.

In the automatic mode, upon selection of a specific object type, a definition 11 is retrieved from the knowledge repository 60. The definition 11 of an object type comprises a number of attributes 12 that characterize the object type 51. For instance, the object type "sales order" comprises in its definition the attributes "ID", "creator", "customer", "status", "creation time", "payment time", "quotation", and "sales document".

In the automatic mode, each of the attributes is mapped automatically to a respective external data source 30 according to step S2. The mapping 31 between attribute 12 and data source 30 may be already stored in a configuration file 61 in the knowledge repository 60. Mapping an attribute 12 from its respective data source 30 means in other words to identify which fields of a database stored in the at least one external computer system are to be queried and optionally which functions, filters or joins are to be applied to the selected fields in order to retrieve relevant data for the attribute 12 under consideration.

Both in the automatic mode and in the manual mode, the further processing for building an object type 51 is completely abstracted from the user, i.e., executed automatically. The mappings 31 between attributes 12 and external data sources 30 comprised in the configuration file 61 are transformed into at least one execution command 15 which is stored in the storage device 110 of the object type building system 10. The automatic conversion of generic configurations into execution commands 15 has the advantage that validations are more efficient since they can already be performed on the configuration file 61 which is less complex than the resulting execution commands 15. Further, the execution commands 15 may be optimized to increase performance.

The executor 40 executes the execution commands 15 in the at least one data source 30 of the at least one external computer system and stores the results in the respective attributes 12 of the object type 51. With storing the execution commands 15 in the main memory 110 of the object type building system 10, the executor 40 may be adapted to perform delta updates. For delta updates, each query in the external computer system addresses only a fraction of the process data, in particular new process data that was recorded since the last query. Depending on the frequency of the delta updates, the query results are therefore strongly reduced with respect to a query on the entire process data. Each query result is collected and merged to the attributes of the respective object type 51.

Executing the execution commands 15 therefore results in a number of object instances 51 of which each corresponds to exactly one object type 51. In other words, the executing the execution commands 15 populates a defined object type 51 with a number of object instances 52, typically a large number of object instances 52, the large number ranging from a few thousands to billions and more. For a single object instance 52 a respective process protocol may be generated based on which models for real-world processes may be discovered.

Further, the executor 40 is adapted to determine relationships 56 between object types 51. An object type 51 which is populated by the dataset retrieved from the at least one data source 30 forms part of the object-centric data model 50, in which further object types 51 may be already present. The object-to-object relationships are retrieved from the knowledge repository 60 or entered manually. Technically. the object-to-object relationships are represented by foreign-key relationships between the related object types 51. An example for two related object types 51 in the object universe 50 is given in Fig. 5.

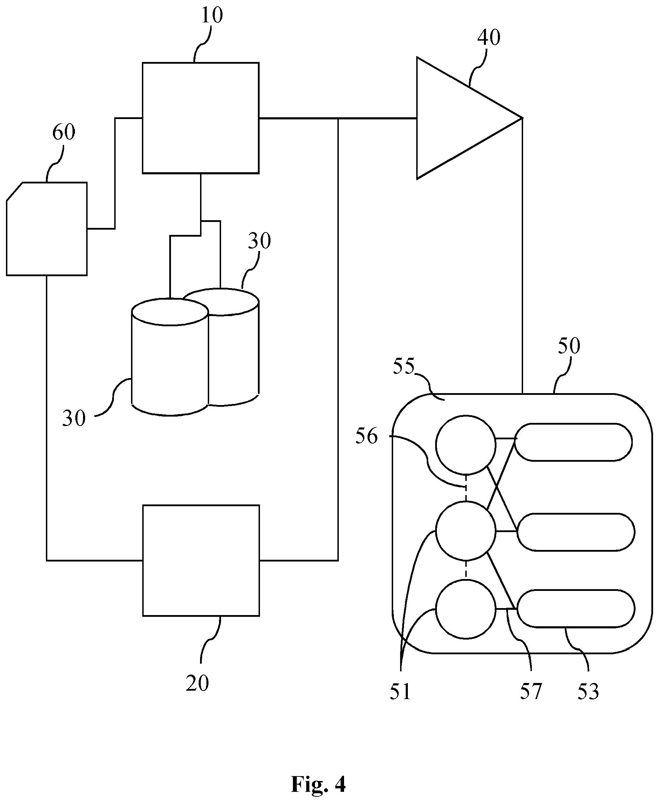

**Fig. 4** shows a schematic view of a system in which the method according to an aspect of the invention may be executed.

The system of Fig. 4 is basically an extension of the system of Fig. 2. The system of Fig. 4 further comprises an event type building system 20. The event type building system 20 has an interface to the object type building system 10, an interface to the executor 40, an interface to the knowledge repository 60. Via the executor 40, the event type building system 20 may further access the object-centric data model 50. The event type building system 20 is adapted to create event types 53. Upon populating event types 53 with event instances 54, one-to-many relationships and many-to-many relationships between the event instances 54 and object types 51 may be established in the object-centric data model 50.

The process for creating event types 53 is described in more detail with respect to Fig. 6. Note that the event type building system 20 may be also directly connected to the object universe 50 in order to enable the creation of event types 53 directly from attributes of certain object types 51. These attributes indicate changes of the respective object instances, such as a creation, a modification, or a termination, and are therefore predestined for the creation of corresponding event types 53.

An event type 53 comprises a number of attributes 22 which are to be mapped from respective data sources 30. The mapping between an attribute 22 of the event type 53 and its respective data source 30 may be also stored in the configuration file 61. For standardized event types, the configuration file 61 may be predetermined and stored in the knowledge repository 60. Based on the stored configuration file 61, execution commands 25 for determining events are automatically generated and stored in a storage device of the event type building system 20. The object type building system 10 and the event type building system 20 also may share the same storage device.

The executor 40 is adapted to execute the generated execution commands 25 in the at least one external computer system in order to populate the attributes 22 of each event type 53. The executor 40 may also populate the event types 53 by way of delta updates in the same way as described above for object types 51.

A created event type 53 forms part of the object universe 50 in which the executor 40 may determine event-to-object relationships 57. The event-to-object relationships 57 may be inherent for event instances 54 that are determined based on attributes indicating changes of an object instance 52. Other event-to-object relationships 57 may be determined based on column names, column types and/or manual input by a user.

**Fig. 5** shows an exemplary embodiment of a process graph according to an aspect of the invention.

The object types 51 and event type 53 in the object-centric data model 50 form the process topology graph 55 as they are connected by edges representing the object-to-object relationships 56 and the event-to-object relationships 57. Each object type 51 is represented by a first node in the process topology graph 55 and each event type is represented a second node in the process topology graph 55. Each object-to-object relationship 56 is represented by a first edge of the process topology graph 55 and each event-to-object relationship 57 is represented by a second edge of the process topology graph 55.

An object type 51 may be represented as a schema description of a first table of a relational database system, wherein each row of the first table stores a corresponding object instance 52. Similarly, the attributes 22 of an event type 53 may represent a schema of a second table of the relational database system, wherein each row of the second table stores a corresponding event instance 54.

Fig. 5 shows two first tables representing simplified object types 51. One object type 51 is the "sales order"-object type, the second object type is the "invoice"-object type. The "sales order"-object type comprises three attributes: "ID", "material", and "quantity". The "invoice"-object type comprises two attributes: "ID", and "price". Due to an object-to-object relationship 56, a third attribute is inserted into the "invoice"-object type: "sales order ID". As a result, the first table representing the "sales order"-object type is connected to the first table representing the "invoice"-object type using a foreign-key relationship between the "ID"-attribute of the "sales order"-object type and the "sales order ID"-attribute of the "invoice"-object type.

The event type 52 of Fig. 5 is a "pay invoice"-event type. The "pay invoice"-event type comprises event instances 54 or process steps in which an "invoice"-object related to a "sales order"-object was paid. The "pay invoice"-event type comprises three attributes 22 in this example: "ID", "timestamp", and "executed by". None of these three attributes was directly derived from an attribute 12 of the respective object types 51 in this example. Instead, the data stored in the attributes 22 of the "pay invoice"-event type was retrieved from a changelog 35 of the at least one external computer system.

Between the event instances 54 of the "pay invoice"-event type and the object instances 52 of the "sales order"-object type an event-to-object relationship 57 was determined based on the "ID"-attributes. Similarly, an event-to-object relationship 57 was determined between the event instances 54 of the "pay invoice"-event type and the object instances 53 of the "invoice"-object type.

The resulting process topology graph 55 has the advantage that queries for process mining may be executed much more efficiently than in the case in which each process step is exactly assigned to a single process instance. In particular, the process topology graph 55 enables a discovery of process in which multiple interacting objects are involved, such as it is the case in a significant part of real-world processes.

**Fig. 6** shows a schematic view on an embodiment according to an aspect of the invention to generate event instances.

An event type 53 comprises a number of attributes 22 which are mapped to a data source 30 based on which the attribute 22 may be populated, i.e., from which data may be queried and stored in attribute. The attributes 22 of an event type 53 may be populated in two ways. First, an event instance 54 may be detected from certain attributes 12 of object types 51 in the object-centric data model 50. These attributes 12 indicate changes that may be a related to a process step or event instance. Second, attributes 22 of an event type 53 may be populated from a changelog 35. A changelog 35 is recorded in the at least one external computer system and comprises a number of change records. Each change record is assigned to a specific object instance 52 and comprises attributes to reflect the changes to the respective object instance 52. As the changes on an object instance are induced by process steps in which the object instance was involved, the changelog 35 is a data source for creating and populating event types 53.

In one embodiment, the changelog 35 comprises a number of attributes, in particular an identifier for a change record, an identifier of the object instance 52 related to the change record, a time of the change, an attribute of the object type 51 to which the object instance 52 of the change record is attributed, the old value of this attribute and the new value of this attribute. Optionally, the changelog 35 may comprise an attribute indicating the type of change, which may be limited to updates, insertions, and deletions, an attribute indicating who executed a change and an attribute describing the mechanism for the change. The changelog 35 may further comprise an attribute indicating the operation which may be used for grouping changes.

The attributes of an event type 53 are mapped from the respective data source, i.e., either from the object universe or the changelog 35, optionally by means of at least one heuristics.

For instance, the values retrieved for an attribute 22 of the event type 53 may be filtered or grouped. Filtering the values means to store only changes having a value in a predefined range as record into the respective attribute of the event type. Grouping the change records can be used for accumulating change records that are separated by less than a predefined interval from a previous change into one single event instance 54. Each record in the attributes 22 of an event type 53 defines an event instance 54.

The mappings of the attributes 22 to the data sources 30 and the heuristics which are to be applied to the change records to be retrieved from the data sources 30 are stored in the configuration file 61. The configuration file 61 is automatically converted into a set of execution commands 15; 25 which then may be executed by the executor 40.

**Fig. 7** shows an exemplary embodiment of the user interface of the object type building system.

The user interface 100 of the object type building system 10 is particularly used for the manual approach to define object types 51 and map their attributes 12 from respective data sources 30. The user interface 100 provides a no-code editor which embodies a direct handle for a user to transform the raw process data of at least one data source 30 in at least one external computer system into an object-centric data model.

In the top left panel of the exemplary user interface 100 of Fig. 7, a list of available data sources 30 is presented to the user.

The lower panel of the user interface 100 in Fig. 7 is an interactive interface in which the user may create object type definitions 11 comprising a number of attributes 12 of the object type to be created. By clicking on the "plus" icon, a new attribute 12 may be added to the definition 11 of the object type to be created and/or adapted.

Each attribute 12 is to be mapped from a data source 30 or a combination of the data sources 30. The mapping 31 of an attribute 12 from its respective at least one data source 30 is simplified as it is reduced to the minimum of information required to identify the respective at least one data source 30. In particular, only field names of a database table of the at least one data source 30 are used to define the mapping 31. In case a function is to be applied to one or more data sources 30 upon mapping to the respective attribute 12, the function is simply indicated by its name. The mapping 31 of an attribute 12 to the correct data values therefore requires no coding and only minimal technical experience with database systems in general and the extracted data sources 30 from the at least one external computer system. Hence, the user interface 100 reduces the cognitive challenge of a user for transforming recorded process data into an object-centric data model such that the method according to the invention may be also applied to large-scale data sets with a large number, i.e., a million or more, interacting object instances 52 and event instances 54.

The user interface 100 further provides a table summarizing displaying the object instances 52 as a preview retrieved from the data sources 30 which are mapped to the respective attributes 12.

The mapped data sources are stored along with the respective attribute 12 in the configuration file 61. Once the mapping of data sources to attributes is complete, and the configuration file is stored, a data lineage graph 101 is presented to the user and the top right panel of the user interface 100 of Fig. 7. The data lineage graph 101 represents the network of data retrieval to determine object instances 52 for a corresponding object type 51 and visualizes the respective data flow. The user interface 100 may provide a button interface or similar by which the user is enabled to trigger the executor 40 to execute the data lineage graph 101, i.e., the execution of the execution commands 15 that were generated on basis of the configuration file 61.

The data lineage graph 101 is generated from the information stored in the configuration file 61.

The user interface 100 of the object type building system 10 therefore provides a guided user experience as a purpose-built method to create the very specific output format of object types 51 based on the data recorded in the at least one external computer system.

Accordingly, the event type building system 20 comprises a user interface (not shown) by which the user may manually compose event types 53 and define the heuristics to be applied upon determination of event instances 54.

The method according to the invention and any of its further aspects is applicable to any dataset comprising process steps, i.e., independent of the domain, organization and/or industry in which the processes are executed.

The method according to the invention provides the basis for any subsequent consumer of the object-centric data model 50, e.g., consumers of a process mining system. Consumers may discover process models, compute key performance indicators for multiple objects depending on each other, and/or provide drill-down capabilities for a seamless exploration of individual components of a complex real-world process. Any application consuming from the object-centric data model 50 thereby benefits from its data structure in that the cognitive challenge for crafting queries to be executed is strongly reduced.

### List of reference numerals:

- 10: object type building system
- 11: object type definition
- 12: object type attribute
- 14: change indicator
- 15: at least one execution command to generate object instances
- 20: event type building system
- 21: event type definition
- 22: event type attribute
- 25: at least one execution command to generate event instances
- 30: at least one data source of the at least one external computer system
- 31: at least one mapped data source
- 35: change log
- 40: executer
- 50: object-centric data model
- 51: object type
- 52: object instance
- 53: event type
- 54: event instance
- 55: process topology graph
- 56: object-to-object relationship
- 57: event-to-object relationship
- 60: knowledge repository
- 61: configuration file
- 100: user interface of the object type building system
- 101: data lineage graph
- 110: storage device of the event type building system

## Claims

1. Computer-implemented method to generate an object-centric data model (50) of process data, wherein the process data is extracted from at least one external computer system, wherein the process data is a multidimensional data set which is generated during executions of processes, wherein each process comprises a number of process steps, wherein a number of object instances (52) participate in executing the number of processes steps,
the method comprising:
- creating a definition (11) of at least two object types (51) by defining a number of attributes (12) for each object type (51), wherein the attributes of an object type characterize the object type, and the attributes of an object type provide a search requirement to identify corresponding object instances in the recorded process data,
- assigning the number of attributes (12) for each object type (51) to at least one data source (30) of the at least one external computer system to determine process data related to the number of object instances (52), wherein assigning the number of attributes to the data source comprises functions, filter, joins and any further operation that is required to translate the raw data stored in the source system into the defined object types, thereby enabling a transformation of the extracted process data into object instances, wherein each object instance is assigned to exactly one object type based on its attributes,
- Generating, for each object type (51), at least one execution command (15; 25) to extract at least one object instance (52) corresponding to the definition (11) of the object type (51), the extraction being adapted to transform the determined process data into a data structure representing the at least one object instance (52), wherein the at least one execution command (15; 25) is generated based on a configuration file (61),
- creating, for each object type (51), the at least one object instance (52) by executing the at least one execution command (15), wherein an executor (40) executes the at least one execution command (15; 25), wherein the at least one extracted object instance (52) is assigned to exactly one object type (51), and wherein the at least one execution command comprises filter conditions for filtering records of a database table of the at least one data source based on the presence of specific values in predefined fields,
- determining a number of object-to-object relationships (56) that enable two respective object types (51) to be joined, wherein the object-to-object relationships are represented by foreign-key relationships between related object types (51), and
- generating the object-centric data model (50) on basis of the at least two object types (51) and the number of determined object-to-object relationships (56), wherein in the object-centric data model (50), the object types (51) are connected by their relationships (56) to a process topology graph (55),
wherein the object-centric data model of process data is provided to a process mining system comprising multiple consumers, wherein each consumer determines a set of key performance indicators by querying the object-centric data model, and
wherein
- the definition (11) of the at least two object types (51) are created automatically,
- the number of attributes (12) for each object type (51) are assigned automatically to at least one data source (30) of the at least one external computer system, and
- the at least one execution command (15; 25) is generated automatically.

2. The method of claim 1, further comprising:
- creating a definition of a number of event types (53) by defining a number of attributes (22) for each event type (53),
- determining a number of event instances (54) on basis of the number of process steps by populating the number of attributes (22) of corresponding event types (53) such that each determined event instance (54) is assigned to exactly one event type (53), and
- determining a number of event-to-object relationships (57) to join at least one object instance (52) of the at least two object types (51) with at least one event instance (54), and
- appending the number of determined event types (53) and the number of determined event-to-object relationships (57) to the object-centric data model (50).

3. The method of claim 2, wherein the event instances (54) are determined from at least one attribute (11) of at least one object type (51).

4. The method of claim 2, wherein the event instances (54) are determined from a predefined changelog (35) which is determined from the at least one external computer system, wherein the predefined changelog (35) is generated during executions of processes.

5. The method of claim 1, further comprising adapting the configuration file (61) by way of a user interface (100) and validating the adapted configuration file (61) before further processing.

6. The method of claim 2, wherein the definition (21) of a number of event types (53) are created, and the event instances (54) are determined automatically.

7. The method of claim 1, wherein the configuration file (61) is stored in the knowledge repository (60).

8. The method of claim 2, wherein the event instances (54) are determined using at least one heuristic which is based on a timestamp which is extracted from respective process steps.

9. The method of claim 8, wherein the at least one heuristic is selected from a group consisting of:
- grouping predefined changes in the at least two object types (51) based on the timestamp,
- grouping predefined changes in a specific object type (51) based on the timestamp,
- a manual instantiation by a user, and
- combinations thereof.

10. The method of claims 9 and 1, wherein the at least one heuristic is stored in the configuration file (61).

11. The method of claim 2, wherein the number of event-to-object relationships (54) is determined based on a group of methods consisting of:
- relating an event instance (54) to an object instance (52) from which the event instance (54) originates or based on which a value of an attribute (12) of the object instance (52) changes,
- relating an event instance (54) to an object instance (52) through a corresponding object-to-object relationship (56) comprising the object instance (52) from which the event instance (54) originates,
- each object instance (52) comprising a date attribute, in which a timestamp is stored, and wherein an event instance (54) is related to all object instances (52) of which the stored timestamp lies within a predefined time interval of a predefined reference timestamp,
- combinations thereof.

12. The method of claim 1, wherein each object instance (52) and each event instance (54) are stored in a relational database, wherein each object-to-object relationship (56) is a foreign-key relationship joining two respective object types (51) and each event-to-object relationship (57) is a primary-key relationship joining a corresponding event instance (54) to a corresponding object instance (52).

## Patentansprüche

1. Computerimplementiertes Verfahren zum Erzeugen eines objektzentrierten Datenmodells (50) von Prozessdaten, wobei die Prozessdaten aus mindestens einem externen Computersystem extrahiert werden, wobei die Prozessdaten ein mehrdimensionaler Datensatz sind, der während der Ausführungen von Prozessen erzeugt wird, wobei jeder Prozess eine Anzahl von Prozessschritten umfasst, wobei eine Anzahl von Objektinstanzen (52) an der Ausführung der Anzahl von Prozessschritten beteiligt ist,
das Verfahren umfassend:
- Erstellen einer Definition (11) von mindestens zwei Objekttypen (51) durch Definieren einer Anzahl von Attributen (12) für jeden Objekttyp (51), wobei die Attribute eines Objekttyps den Objekttyp kennzeichnen und die Attribute eines Objekttyps eine Suchanforderung zum Identifizieren entsprechender Objektinstanzen in den aufgezeichneten Prozessdaten bereitstellen,
- Zuweisen der Anzahl von Attributen (12) für jeden Objekttyp (51) zu mindestens einer Datenquelle (30) des mindestens einen externen Computersystems, um Prozessdaten in Bezug auf die Anzahl der Objektinstanzen (52) zu bestimmen, wobei das Zuweisen der Anzahl von Attributen zur Datenquelle Funktionen, Filter, Verbindungen und jeglichen weiteren Vorgang umfasst, der erforderlich ist, um die im Quellsystem gespeicherten Rohdaten in die definierten Objekttypen zu übersetzen und dadurch eine Transformation der extrahierten Prozessdaten in Objektinstanzen zu ermöglichen, wobei jede Objektinstanz basierend auf ihren Attributen exakt einem Objekttyp zugewiesen wird,
- Erzeugen, für jeden Objekttyp (51), mindestens eines Ausführungsbefehls (15; 25), um mindestens eine Objektinstanz (52) zu extrahieren, die der Definition (11) des Objekttyps (51) entspricht, wobei die Extraktion angepasst wird, um die bestimmten Prozessdaten in eine Datenstruktur zu transformieren, die die mindestens eine Objektinstanz (52) darstellt, wobei der mindestens eine Ausführungsbefehl (15; 25) basierend auf einer Konfigurationsdatei (61) erzeugt wird,
- Erstellen, für jeden Objekttyp (51), mindestens einer Objektinstanz (52) durch Ausführen des mindestens einen Ausführungsbefehls (15), wobei ein Executor (40) den mindestens einen Ausführungsbefehl (15; 25) ausführt, wobei die mindestens eine extrahierte Objektinstanz (52) exakt einem Objekttyp (51) zugewiesen wird und wobei der mindestens eine Ausführungsbefehl Filterbedingungen zum Filtern von Datensätzen einer Datenbanktabelle der mindestens einen Datenquelle basierend auf dem Vorhandenseins spezifischer Werte in vordefinierten Feldern umfasst,
- Bestimmen einer Anzahl von Objekt-zu-Objekt-Beziehungen (56), die es ermöglichen, dass zwei jeweilige Objekttypen (51) verbunden werden, wobei die Objekt-zu-Objekt-Beziehungen durch Fremdschlüsselbeziehungen zwischen verwandten Objekttypen (51) dargestellt werden, und
- Erzeugen des objektzentrierten Datenmodells (50) auf Basis der mindestens zwei Objekttypen (51) und der Anzahl der bestimmten Objekt-zu-Objekt-Beziehungen (56), wobei im objektzentrierten Datenmodell (50) die Objekttypen (51) durch ihre Beziehungen (56) mit einem Prozesstopologiegraphen (55) verbunden sind,
wobei das objektzentrierte Datenmodell der Prozessdaten einem Prozessmining-System umfassend mehrere Verbraucher bereitgestellt wird, wobei jeder Verbraucher einen Satz von Hauptleistungskennzahlen durch Abfrage des objektzentrierten Datenmodells bestimmt, und
wobei
- die Definition (11) der mindestens zwei Objekttypen (51) automatisch erstellt wird,
- die Anzahl der Attribute (12) für jeden Objekttyp (51) automatisch mindestens einer Datenquelle (30) des mindestens einen externen Computersystems zugewiesen wird und
- der mindestens eine Ausführungsbefehl (15; 25) automatisch erzeugt wird.

2. Verfahren nach Anspruch 1, ferner umfassend:
- Erstellen einer Definition einer Anzahl von Ereignistypen (53) durch Definieren einer Anzahl von Attributen (22) für jeden Ereignistyp (53),
- Bestimmen einer Anzahl von Ereignisinstanzen (54) basierend auf der Anzahl der Prozessschritte durch Ausfüllen der Anzahl von Attributen (22) der entsprechenden Ereignistypen (53), sodass jede bestimmte Ereignisinstanz (54) exakt einem Ereignistyp (53) zugewiesen wird, und
- Bestimmen einer Anzahl von Ereignis-zu-Objekt-Beziehungen (57), um mindestens eine Objektinstanz (52) der mindestens zwei Objekttypen (51) mit mindestens einer Ereignisinstanz (54) zu verbinden, und
- Anhängen der Anzahl der bestimmten Ereignistypen (53) und der Anzahl der bestimmten Ereignis-zu-Objekt-Beziehungen (57) an das objektzentrierte Datenmodell (50).

3. Verfahren nach Anspruch 2, wobei die Ereignisinstanzen (54) aus mindestens einem Attribut (11) mindestens eines Objekttyps (51) bestimmt werden.

4. Verfahren nach Anspruch 2, wobei die Ereignisinstanzen (54) aus einem vordefinierten Änderungsprotokoll (35) bestimmt werden, das aus mindestens einem externen Computersystem bestimmt wird, wobei das vordefinierte Änderungsprotokoll (35) während der Ausführungen von Prozessen erzeugt wird.

5. Verfahren nach Anspruch 1, ferner umfassend das Anpassen der Konfigurationsdatei (61) mittels einer Benutzerschnittstelle (100) und das Validieren der angepassten Konfigurationsdatei (61) vor der weiteren Verarbeitung.

6. Verfahren nach Anspruch 2, wobei die Definition (21) einer Anzahl von Ereignistypen (53) erstellt wird und die Ereignisinstanzen (54) automatisch bestimmt werden.

7. Verfahren nach Anspruch 1, wobei die Konfigurationsdatei (61) im Wissensrepository (60) gespeichert ist.

8. Verfahren nach Anspruch 2, wobei die Ereignisinstanzen (54) unter Verwendung mindestens einer Heuristik bestimmt werden, die auf einem Zeitstempel basiert, der aus den jeweiligen Prozessschritten extrahiert wird.

9. Verfahren nach Anspruch 8, wobei die mindestens eine Heuristik aus einer Gruppe ausgewählt wird, bestehend aus:
- Gruppierung vordefinierter Änderungen in mindestens zwei Objekttypen (51) basierend auf dem Zeitstempel,
- Gruppierung vordefinierter Änderungen in einem spezifischen Objekttyp (51) basierend auf dem Zeitstempel,
- einer manuellen Instanziierung durch einen Benutzer und
- Kombinationen davon.

10. Verfahren nach Anspruch 9 und 1, wobei die mindestens eine Heuristik in der Konfigurationsdatei (61) gespeichert ist.

11. Verfahren nach Anspruch 2, wobei die Anzahl der Ereignis-zu-Objekt-Beziehungen (54) basierend auf einer Gruppe von Verfahren bestimmt wird, bestehend aus:
- In-Beziehung-Setzen einer Ereignisinstanz (54) mit einer Objektinstanz (52), aus der die Ereignisinstanz (54) stammt oder worauf basierend sich ein Wert eines Attributs (12) der Objektinstanz (52) ändert,
- In-Beziehung-Setzen einer Ereignisinstanz (54) mit einer Objektinstanz (52) über eine entsprechende Objekt-zu-Objekt-Beziehung (56), umfassend die Objektinstanz (52), aus der die Ereignisinstanz (54) stammt,
- jeder Objektinstanz (52), umfassend ein Datumsattribut, in dem ein Zeitstempel gespeichert ist, und wobei eine Ereignisinstanz (54) mit allen Objektinstanzen (52) in Beziehung steht, deren gespeicherter Zeitstempel innerhalb eines vordefinierten Zeitintervalls eines vordefinierten Referenzzeitstempels liegt,
- Kombinationen davon.

12. Verfahren nach Anspruch 1, wobei jede Objektinstanz (52) und jede Ereignisinstanz (54) in einer relationalen Datenbank gespeichert sind, wobei jede Objekt-zu-Objekt-Beziehung (56) eine Fremdschlüsselbeziehung ist, die zwei entsprechende Objekttypen (51) verbindet, und jede Ereignis-zu-Objekt-Beziehung (57) eine Primärschlüsselbeziehung ist, die eine entsprechende Ereignisinstanz (54) mit einer entsprechenden Objektinstanz (52) verbindet.

## Revendications

1. Procédé implémenté par ordinateur pour générer un modèle de données centré sur objet (50) de données de processus, dans lequel les données de processus sont extraites d'au moins un système informatique externe, dans lequel les données de processus sont un ensemble de données à plusieurs dimensions qui est généré pendant des exécutions de processus, dans lequel chaque processus comprend un nombre d'étapes de processus, dans lequel un nombre d'instances d'objet (52) participent à l'exécution du nombre d'étapes de processus,
le procédé comprenant :
- la création d'une définition (11) d'au moins deux types d'objet (51) en définissant un nombre d'attributs (12) pour chaque type d'objet (51), dans lequel les attributs d'un type d'objet caractérisent le type d'objet, et les attributs d'un type d'objet fournissant une exigence de recherche pour identifier des instances d'objet correspondantes dans les données de processus enregistrées,
- l'attribution du nombre d'attributs (12) pour chaque type d'objet (51) à au moins une source de données (30) de l'au moins un système informatique externe pour déterminer des données de processus apparentées au nombre d'instances d'objet (52), dans lequel l'attribution du nombre d'attributs à la source de données comprend des fonctions, un filtre, des jointures et l'une quelconque opération ultérieure qui est requise pour traduire les données brutes stockées dans le système source en les types d'objet définis, en permettant de ce fait une transformation des données de processus extraites en instances d'objet, dans lequel chaque instance d'objet est attribuée à exactement un type d'objet en fonction de ses attributs,
- la génération, pour chaque type d'objet (51), d'au moins une commande d'exécution (15 ; 25) pour extraire au moins une instance d'objet (52) correspondant à la définition (11) du type d'objet (51), l'extraction étant adaptée pour transformer les données de processus déterminées en une structure de données représentant l'au moins une instance d'objet (52), dans lequel l'au moins une commande d'exécution (15 ; 25) est générée en fonction d'un fichier de configuration (61),
- la création, pour chaque type d'objet (51), de l'au moins une instance d'objet (52) en exécutant l'au moins une commande d'exécution (15), dans lequel un exécuteur (40) exécute l'au moins une commande d'exécution (15 ; 25), dans lequel l'au moins une instance d'objet (52) extraite est attribuée à exactement un type d'objet (51), et dans lequel l'au moins une commande d'exécution comprend des conditions de filtre permettant de filtrer des enregistrements d'une table de base de données de l'au moins une source de données en fonction de la présence de valeurs spécifiques dans des champs prédéfinis,
- la détermination d'un nombre de relations objet-objet (56) qui permettent à deux types d'objet (51) respectifs d'être joints, dans lequel les relations objet-objet sont représentées par des relations de clé étrangère entre des types d'objet (51) apparentés, et
- la génération du modèle de données centré sur objet (50) en fonction des au moins deux types d'objet (51) et du nombre de relations objet-objet (56) déterminées, dans lequel dans le modèle de données centré sur objet (50), les types d'objet (51) sont reliés par leurs relations (56) à un graphe de topologie de processus (55),
dans lequel le modèle de données centré sur objet de données de processus est fourni à un système d'exploration de processus comprenant de multiples consommateurs, dans lequel chaque consommateur détermine un ensemble d'indicateurs de performance clés en interrogeant le modèle de données centré sur objet, et
dans lequel
- la définition (11) des au moins deux types d'objet (51) est créée automatiquement,
- le nombre d'attributs (12) pour chaque type d'objet (51) est attribué automatiquement à au moins une source de données (30) de l'au moins un système informatique externe, et
- l'au moins une commande d'exécution (15 ; 25) est générée automatiquement.

2. Procédé selon la revendication 1, comprenant en outre :
- la création d'une définition d'un nombre de types d'événement (53) en définissant un nombre d'attributs (22) pour chaque type d'événement (53),
- la détermination d'un nombre d'instances d'événement (54) en fonction du nombre d'étapes de processus en peuplant le nombre d'attributs (22) de types d'événement (53) correspondants de telle sorte que chaque instance d'événement (54) déterminée est attribuée à exactement un type d'événement (53), et
- la détermination d'un nombre de relations événement-objet (57) pour joindre au moins une instance d'objet (52) des au moins deux types d'objet (51) à au moins une instance d'événement (54), et
- adjoindre le nombre de types d'événement (53) déterminés et le nombre de relations événement-objet (57) déterminées au modèle de données centré sur objet (50).

3. Procédé selon la revendication 2, dans lequel les instances d'événement (54) sont déterminées à partir d'au moins un attribut (11) d'au moins un type d'objet (51).

4. Procédé selon la revendication 2, dans lequel les instances d'événement (54) sont déterminées à partir d'un journal de changements prédéfini (35) qui est déterminé à partir de l'au moins un système informatique externe, dans lequel le journal de changements prédéfini (35) est généré pendant des exécutions de processus.

5. Procédé selon la revendication 1, comprenant en outre l'adaptation du fichier de configuration (61) au moyen d'une interface utilisateur (100) et la validation du fichier de configuration (61) adapté avant un traitement ultérieur.

6. Procédé selon la revendication 2, dans lequel la définition (21) d'un nombre de types d'événement (53) est créée, et les instances d'événement (54) sont déterminées automatiquement.

7. Procédé selon la revendication 1, dans lequel le fichier de configuration (61) est stocké dans le magasin de connaissances (60).

8. Procédé selon la revendication 2, dans lequel les instances d'événement (54) sont déterminées à l'aide d'au moins une heuristique qui est en fonction d'un horodatage qui est extrait d'étapes de processus respectives.

9. Procédé selon la revendication 8, dans lequel l'au moins une heuristique est choisie dans un groupe constitué par :
- un regroupement de changements prédéfinis dans les au moins deux types d'objet (51) en fonction de l'horodatage,
- un regroupement de changements prédéfinis dans un type d'objet (51) spécifique en fonction de l'horodatage,
- une instanciation manuelle par un utilisateur, et
- des combinaisons de ceux-ci.

10. Procédé selon les revendications 9 et 1, dans lequel l'au moins une heuristique est stockée dans le fichier de configuration (61).

11. Procédé selon la revendication 2, dans lequel le nombre de relations événement-objet (54) est déterminé en fonction d'un groupe de procédés constitué de :
- la mise en relation d'une instance d'événement (54) à une instance d'objet (52) de laquelle l'instance d'événement (54) provient ou en fonction de laquelle une valeur d'un attribut (12) de l'instance d'objet (52) change,
- la mise en relation d'une instance d'événement (54) à une instance d'objet (52) par le biais d'une relation objet-objet (56) correspondante comprenant l'instance d'objet (52) de laquelle l'instance d'événement (54) provient,
- chaque instance d'objet (52) comprenant un attribut de date, dans lequel un horodatage est stocké, et dans lequel une instance d'événement (54) se rapporte à toutes les instances d'objet (52) dont l'horodatage stocké se trouve dans les limites d'un intervalle de temps prédéfini d'un horodatage de référence prédéfini,
- des combinaisons de ceux-ci.

12. Procédé selon la revendication 1, dans lequel chaque instance d'objet (52) et chaque instance d'événement (54) sont stockées dans une base de données relationnelle, dans lequel chaque relation objet-objet (56) est une relation de clé étrangère joignant deux types d'objet (51) respectifs et chaque relation événement-objet (57) est une relation de clé primaire joignant une instance d'événement (54) correspondante à une instance d'objet (52) correspondante.
